# EUROPÄISCHE PATENTSCHRIFT

(11) **EP 3 788 298 B1**
(45) Veröffentlichungstag und Bekanntmachung des Hinweises auf die Patenterteilung: **30.04.2025**
(21) Anmeldenummer: 19719764.3
(22) Anmeldetag: 25.03.2019
(51) Int. Cl.: F21S 43/239, F21S 43/245, F21S 43/249, F21S 43/14, F21S 43/15, F21S 43/19, F21S 43/20, G09F 13/04, G09F 21/04, B60R 13/00, B60Q 1/28, B60Q 1/00, B60Q 1/50, B60Q 1/30

(54) **KRAFTFAHRZEUGBELEUCHTUNGSMODUL**
MOTOR VEHICLE LIGHTING MODULE
MODULE D'ÉCLAIRAGE DE VÉHICULE À MOTEUR

(30) Priorität: 03.05.2018 DE 102018003553
(43) Veröffentlichungstag der Anmeldung: 10.03.2021
(73) Patentinhaber: Huf Hülsbeck & Fürst GmbH & Co. KG, 42551 Velbert (DE)
(72) Erfinder: BUSCHMANN, Gerd, 42553 Velbert (DE)
(74) Vertreter: Patentanwaltskanzlei Methling
(86) Internationale Anmeldenummer: PCT/EP2019/000092
(87) Internationale Veröffentlichungsnummer: WO 2019/210990

(56) Entgegenhaltungen:
- EP-A1- 1 911 630
- EP-A2- 1 903 359
- WO-A1-2015/072133
- WO-A1-2017/009260
- DE-A1- 102013 007 856
- DE-U1- 202017 105 259
- JP-A- 2013 103 701
- US-A1- 2007 183 156
- US-A1- 2016 161 080
- US-A1- 2017 357 044

## Beschreibung

Die Erfindung betrifft ein Kraftfahrzeugbeleuchtungsmodul nach dem Oberbegriff gemäß Anspruch 1.

Ein derartiges Kraftfahrzeugbeleuchtungsmodul ist aus der WO 2017/009260 A1 bekannt. Aus der EP 1 903 359 A2 ist eine Leuchte für Fahrzeugdächer bekannt, die eine gleichmäßige Lichtabstrahlung über ihre gesamte Fläche erreicht, die von umlaufend auf einer Schichtplatte angeordneten Lichtaustrittsmitteln herrührt.

Derartige Kraftfahrzeugbeleuchtungsmodule mit einem Gehäuse, das von einer Trägerplatte und einem daran befestigten kreisrunden oder elliptischen Oberteil gebildet wird, wobei das Oberteil zumindest teilweise lichtdurchlässig ist und das Gehäuse nach außen abschließt und wobei eine Mehrzahl von Lichtstrahlen emittierenden Lichtquellen in dem Gehäuse aufgenommen sind, sind aus dem Stand der Technik bekannt.

Typischerweise weist eine Trägerplatte eines Beleuchtungsmoduls eine Mehrzahl von arrayförmig gereihten Leuchtdioden oder parallelen Leuchtdioden-Streifen auf. Das Licht der Leuchtdioden wird von einer Reflexionsplatte nach oben reflektiert und von einer Lichtleitplatte gleichmäßig verteilt, damit ein homogenes Ausgangslicht erhalten wird.

Nachteilig bei den bekannten Kraftfahrzeugbeleuchtungsmodulen ist es jedoch, dass für eine solche Hintergrundbeleuchtung eine hohe Anzahl von Leuchtdioden benötigt, wodurch die Dicke, das Gewicht und der Stromverbrauch des Beleuchtungsmoduls erhöht werden. Zur Beleuchtung beispielsweise eines Emblems des Kraftfahrzeugherstellers sind die bekannten Anordnungen ungeeignet.

Die Aufgabe der Erfindung ist es, ein Kraftfahrzeugbeleuchtungsmodul bereitzustellen, bei dem eine Beleuchtung, beispielsweise eines Kraftfahrzeugemblems, mit einer geringeren Anzahl und effektiveren Anordnung von elektronischen und optischen Bauelementen erzielt wird. Insbesondere ist es wünschenswert, dass zusätzliche Elektronik, wie beispielsweise Sensorik und/oder eine Kamera, in dem Gehäuse eines solchen Beleuchtungsmoduls aufgenommen werden können.

Diese Aufgabe wird erfindungsgemäß durch ein Kraftfahrzeugbeleuchtungsmodul gemäß Anspruch 1 gelöst. Vorteilhafte Weiterbildungen der Erfindung sind in den Unteransprüchen angegeben.

Besonders vorteilhaft bei dem Kraftfahrzeugbeleuchtungsmodul zumindest umfassend ein Gehäuse, das von einer Trägerplatte und einem daran befestigten kreisrunden oder elliptischen Oberteil gebildet wird, wobei das Oberteil zumindest teilweise lichtdurchlässig ist und das Gehäuse nach außen abschließt, wobei eine Mehrzahl von Lichtstrahlen emittierenden Lichtquellen in dem Gehäuse aufgenommen sind, ist es, dass in dem Gehäuse ein scheibenförmiger Lichtleiter angeordnet ist und die Lichtquellen derart angeordnet sind, dass ein kreisrunder oder elliptischre Ring ausgebildet ist, in dem der Lichtleiter zumindest teilweise einliegt, wobei der Lichtleiter an seinem Umfang zumindest einen Absatz aufweist und den durch die Lichtquellen gebildeten Ring in radialer Richtung überragt.

Dadurch, dass der scheibenförmige Lichtleiter an seinem Umfang einen Absatz aufweist, ist der Lichtleiter mit einem ersten Abschnitt, der einen ersten Durchmesser aufweist, und einem zweiten Abschnitt, der einen zweiten Durchmesser aufweist, der größer als der erste Durchmesser ist, ausgebildet. Der erste Abschnitt mit dem kleineren Durchmesser liegt in dem durch die Lichtquellen gebildeten Ring ein und der zweite Abschnitt mit dem größeren Durchmesser überragt den durch die Lichtquellen gebildeten Ring in radialer Richtung.

Besonders wichtig ist es, dass der zweite Abschnitt des Lichtleiters mit dem größeren Durchmesser den durch die Lichtquellen gebildeten Ring in radialer Richtung überragt, damit der Lichtleiter das kreisrunde Oberteil in seiner vollständigen kreisförmigen Ausdehnung zu beleuchten vermag.

Das Beleuchtungsmodul kann an gut sichtbaren Stellen einer Fahrzeugfront und/oder eines Fahrzeughecks angebracht sein.

Das kreisrunde Oberteil des Beleuchtungsmoduls kann beispielsweise ein Emblem eines Kraftfahrzeugherstellers aufweisen und die von den Lichtquellen emittierten Lichtstrahlen können der Beleuchtung eines solchen Emblems dienen. In dem durch die Lichtquellen gebildeten Ring können zusätzlich weitere Elektronikkomponenten angeordnet sein. Des Weiteren kann das erfindungsgemäße Beleuchtungsmodul als ein Positionslicht eines Fahrzeugs dienen.

Es ist üblich, an einem Fahrzeug an bestimmten Stellen, wie beispielsweise der Fahrzeugfront und/oder dem Fahrzeugheck, ein Emblem des Kraftfahrzeugherstellers anzubringen. Das Emblem weist gewöhnlich ein dekoratives Element in Form von Buchstaben, Zeichen oder Figuren bzw. deren Konturen auf. Das Gefühl für die Wertigkeit eines Kraftfahrzeugs kann durch die Beleuchtung des Emblems gesteigert werden. Insbesondere kann eine Hintergrundbeleuchtung für die optische Darstellung eines Emblems attraktiv sein. Das erfindungsgemäße Beleuchtungsmodul ist besonders zur Beleuchtung eines Emblems des Kraftfahrzeugherstellers geeignet.

Da Kraftfahrzeugbeleuchtungsmodule für ein Emblem typischerweise an zentralen, gut sichtbaren Stellen der Fahrzeugfront und/oder dem Fahrzeugheck angebracht sind, ist es besonders vorteilhaft, dass zusätzliche Elektronik, wie beispielsweise Sensorik und/oder eine Kamera, mit der Beleuchtung des Emblems kombiniert werden können.

In einer bevorzugten Ausführungsform sind zumindest ein Teil der Lichtstrahlen der Lichtquellen in Richtung auf den Mittelpunkt oder die Brennpunkte des Ringes gerichtet und sind in den Lichtleiter eingeleitet, sodass der Lichtleiter bis in jenen Teil, der den durch die Lichtquellen gebildeten Ring in radialer Richtung überragt, durch die auf dem Ring gegenüber liegenden Lichtquellen beleuchtet ist. Im Falle eines kreisrunden Ringes weist dieser Kreis einen Mittelpunkt auf. Im Falle eines elliptischen Ringes weist dieser zwei Brennpunkte der Ellipse auf. Durch die entsprechende Ausrichtung zumindest eines Teils der Lichtstrahlen der Lichtquellen durch den Mittelpunkt bei einem kreisrunden Ring bzw. durch die Brennpunkte bei einem elliptischen Ring ist es gewährleistet, dass hierdurch derjenige der Lichtquelle gegenüber liegende Bereich des Lichtleiters beleuchtet wird.

Die Mehrzahl von Lichtquellen ist ringförmig um einen Lichtleiter herum angeordnet ist, sodass sich jeweils zwei Lichtquellen gegenüberliegen und sodass das die von den Lichtquellen emittierten Lichtstrahlen seitlich in den Lichtleiter eintreten. Die von den Lichtquellen emittierten Lichtstrahlen breiten sich in dem Lichtleiter von einem Rand des ersten Abschnitts des Lichtleiters zu einem gegenüberliegenden Rand des zweiten Abschnitts des Lichtleiters aus und treten an dem Rand des zweiten Abschnitts des Lichtleiters aus dem Lichtleiter senkrecht in Richtung des Oberteils aus. Dadurch, dass jeweils zwei Lichtquellen sich gegenüberliegend angeordnet sind, wird eine Ausleuchtung des kreisrunden oder elliptischen Oberteils in seiner vollständigen kreisförmigen oder elliptischen Ausdehnung realisiert. Vorzugsweise ist hierzu der scheibenförmige Lichtleiter geneigt in dem Gehäuse angeordnet. Die Neigung des scheibenförmigen Lichtleiters kann beispielsweise durch eine am Umfang der Trägerplatte angeordnete Schräge realisiert werden.

Gemäß der Erfindung ist der Ring zweigeteilt, wobei zwei getrennte Abschnitte des Rings in der Einbauposition des Beleuchtungsmoduls durch eine senkrechte Trennlinie in einen rechten und einen linken Teil getrennt sind.

Entsprechend den gesetzlichen Vorschriften ist hierdurch eine eindeutige Zuordnung einer rechten Hälfte und einer linken Hälfte des Beleuchtungsmoduls möglich. Somit können beispielsweise die beiden Hälften den rechten bzw. linken Scheinwerfern des Fahrzeuges zugeordnet werden und mit diesen geschaltet werden. Aufgrund des Strahlengangs der einzelnen Lichtquellen ist somit der linke Teil des Rings der rechten Seite der Beleuchtungsmodule des Kraftfahrzeuges zugeordnet, während der rechte Teil des Rings der linken Seite der Beleuchtungsmodule des Kraftfahrzeuges zugeordnet wird.

In einer weiteren bevorzugten Ausführungsform ist jede der Lichtquellen auf einer einzelnen Leiterplatte angeordnet ist oder mehrere Lichtquellen sind auf einzelnen Leiterplatte angeordnet und die einzelnen Leiterplatten sind über ein von der Trägerplatte getragenes ringförmiges Stanzgitter elektrisch miteinander verbunden.

Unabhängig davon, ob eine oder mehrere Lichtquellen auf einer einzelnen Leiterplatte angeordnet sind, sind die einzelnen Leiterplatten ringförmig um den Lichtleiter herum angeordnet, sodass sich jeweils zwei Leiterplatten gegenüberliegen.

Ein Stanzgitter ist eine durch Stanzen erzeugte flache Struktur. Eine Anwendung ist das Erstellen eines Systems elektrischer Leiter in nur einem Fertigungsschritt, hergestellt aus einem Metallstreifen. Durch das Verwenden eines Stanzgitters zum elektrischen Verbinden der einzelnen Leiterplatten untereinander können hohe elektrische Ströme auf engem Raum problemlos verteilt werden. Ein solches Stanzgitter kann einen direkten Anschluss an einen Kabelsatz eines Kraftfahrzeugs über mehrpolige Steckverbinder ermöglichen. Diskrete Komponenten wie Relais oder Sicherungen können durch Einbringen geeigneter Verbinder auf einem Stanzgitter montiert werden. Das Stanzgitter kann dementsprechend mehrpolige Steckverbinder aufweisen.

In einer weiteren bevorzugten Ausführungsform ist das Stanzgitter zweigeteilt, um zwei voneinander getrennte Schaltkreise zu bilden, insbesondere sind die zwei getrennten Schaltkreise in der Einbauposition des Beleuchtungsmoduls durch eine senkrechte Trennlinie in einen rechten und einen linken Teil getrennt.

Entsprechend den gesetzlichen Vorschriften ist durch das Verwenden von zwei getrennten Schaltkreisen eine eindeutige Zuordnung einer rechten Hälfte und einer linken Hälfte des Beleuchtungsmoduls möglich. Somit können beispielsweise die beiden Hälften den rechten bzw. linken Scheinwerfern des Fahrzeuges zugeordnet werden und mit diesen geschaltet werden.

**In** einer weiteren bevorzugten Ausführungsform eine oder mehrere Abdeckung/en gegen direkten Lichtaustritt über den Lichtquellen angeordnet ist/sind, sodass das von den Lichtquellen emittierte Lichtstrahlen nicht zur Umgebung abgestrahlt werden, sondern seitlich in den scheibenförmigen Lichtleiter eintreten.

Die Abdeckung/en ist/sind insbesondere ringförmig ausgebildet, sodass der zweite Abschnitt des Lichtleiters, der den größeren Durchmesser aufweist und der den durch die Lichtquellen gebildeten Ring in radialer Richtung überragt, vollständig bedeckt ist. Dadurch wird auch ein direkter Lichtaustritt aus dem Lichtleiter in Richtung der Trägerplatte vermieden. Die Abdeckung oder die Abdeckungen kann an den Einkoppelstellen der Lichtquellen in den Lichtleiter entsprechende Ausnehmungen aufweisen. Durch derartige Abdeckungen werden insbesondere unerwünschte Beleuchtungseffekte und Reflexionen vermieden, da ausschließlich eine Einleitung von Lichtstrahlen in der gewünschten Ausrichtung von den Lichtquellen in den Lichtleiter ermöglicht wird.

In einer weiteren bevorzugten Ausführungsform weist das Oberteil eine äußere Oberfläche, die insbesondere transparent poliert ist, und eine dreidimensional-strukturierte innere Oberfläche, die einem Emblem entspricht, auf, wobei die innere Oberfläche insbesondere erste lichtundurchlässige Bereiche, insbesondere mit einer dunklen Hochglanzoptik, zweite eingeschränkt lichtdurchlässige Bereiche und dritte lichtdurchlässige insbesondere transparent polierte Bereiche aufweist.

Dabei bildet die äußere Oberfläche eine Frontfläche des Oberteils, auf der das hinterleuchtete Emblem sichtbar ist. Durch die dreidimensional strukturierte innere Oberfläche des Oberteils wird eine attraktive optische Darstellung des Emblems ermöglicht. Die dunkle Hochglanzoptik der ersten lichtundurchlässigen Bereiche kann beispielsweise durch Lackieren, Bedampfen, usw. hergestellt werden. Die zweiten eingeschränkt lichtdurchlässigen Bereiche bieten ein homogenes Lichtbild und können durch Vernarben, Satinieren, Bedampfen, Lackieren, usw. hergestellt werden, sodass von außen betrachtet eine sehr wertige Anmutung realisiert wird. Die dritten lichtdurchlässigen Bereiche gewährleisten einen ungehinderten Lichtaustritt.

In einer weiteren bevorzugten Ausführungsform ist eine transparente Diffusorplatte zwischen dem Lichtleiter und dem Oberteil angeordnet, die die von den Lichtquellen emittierten Lichtstrahlen zerstreut, wobei die Diffusorplatte Strukturflächen, insbesondere an den Konturen des Emblems ausgerichtete Mikropyramiden, aufweist. Mit Hilfe der Diffusorplatte wird eine gleichmäßige Ausleuchtung des Oberteils erzielt.

In einer weiteren bevorzugten Ausführungsform ist jede der Lichtquellen durch eine Leuchtdiode gebildet.

In einer weiteren bevorzugten Ausführungsform ist/sind innerhalb des durch die Lichtquellen gebildeten Rings und/oder in einem Einbauraum ausgehend vom Oberteil hinter der durch den Ring aufgespannten Ebene ein Sensor, insbesondere ein Sensor für eine adaptive Geschwindigkeitsregelung (insbesondere ein sogenannter ACC-Sensor), und/oder eine Kamera angeordnet.

Des Weiteren kann auch eine mit einem Annäherungssensor gekoppelte Signaleinrichtung in dem durch die Lichtquellen gebildeten Ring und/oder in einem Einbauraum ausgehend vom Oberteil hinter der durch den Ring aufgespannten Ebene angeordnet sein. Über die Beleuchtung des Emblems kann dann sowohl ein Hinweis für eine Entfernung von dem Annäherungssensor zur Betätigung gegeben werden, als auch ein Hinweis auf eine bevorstehende Öffnung, beispielsweise einer Heckklappe, insbesondere durch rasches Blinken und/oder einen Farbwechsel. Es können somit Leuchtdiodeneinheiten als Lichtquellen verwendet werden, deren Ansteuerung die Emission von Licht in unterschiedlichen Farben ermöglicht.

In einer weiteren bevorzugten Ausführungsform ist das Beleuchtungsmodul als eine Hochvolt-Komponente ausgebildet.

Mit der fortschreitenden Entwicklung und Einführung von Hybrid- und Elektro-Kraftfahrzeugen und anderen Kraftfahrzeugen mit Hochvolt-Systemen werden immer mehr Hochvolt-Komponenten benötigt. Hochvolt bezeichnet im Automobilsektor insbesondere Spannungen von 48 V oder größer oder auch Spannungen von 60 V oder größer. Die Entwicklung von HV-Komponenten für den Automobilsektor ist dabei insbesondere auf die Erfüllung von technischen Anforderungen ausgerichtet. Diese Anforderungen werden von dem erfindungsgemäßen Beleuchtungsmodul erfüllt.

Ein Ausführungsbeispiel der Erfindung ist in den Figuren dargestellt und wird nachfolgend erläutert. Es zeigen:
- Fig. 1: eine perspektivische Schnittansicht eines Ausschnitts eines Kraftfahrzeugbeleuchtungsmoduls;
- Fig. 2: eine Draufsicht auf die Trägerplatte des Kraftfahrzeugbeleuchtungsmoduls;
- Fig. 3: eine Unteransicht des mit dem Stanzgitter verbundenen Lichtleiters des Kraftfahrzeugbeleuchtungsmoduls;
- Fig. 4: eine perspektivische Ansicht eines Ausschnitts des mit dem Stanzgitter verbundenen Lichtleiters;
- Fig. 5: eine schematische Schnittansicht des Oberteils des Kraftfahrzeugbeleuchtungsmoduls;

**In** den Figuren sind identische Bauteile mit identischen Bezugszeichen versehen.

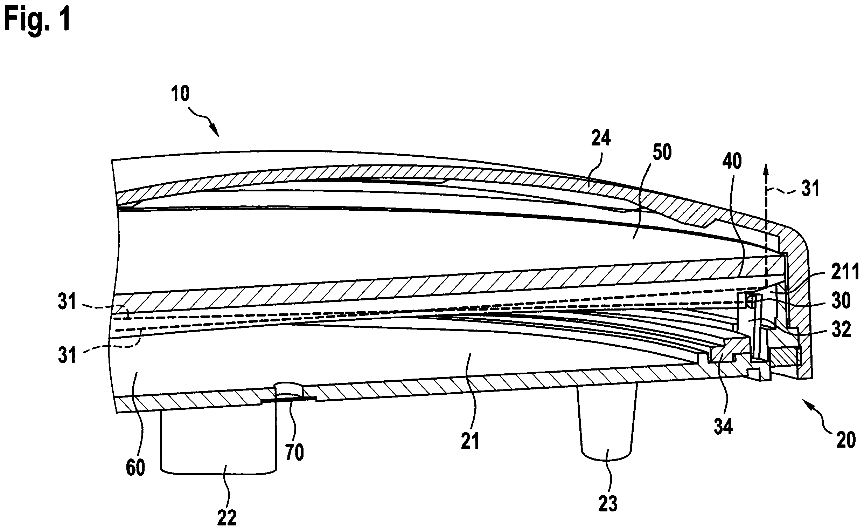

Wie schematisch in Fig. 1 gezeigt umfasst ein Kraftfahrzeugbeleuchtungsmodul 10 ein Gehäuse 20, das von einer Trägerplatte 21 und einem daran befestigten kreisrunden Oberteil 24 gebildet wird. Das Oberteil 24 ist teilweise lichtdurchlässig und schließt das Gehäuse 20 nach außen ab.

Die Trägerplatte 21 weist zwei mehrpolige Steckverbinder 22 auf, die jeweils dem direkten Anschluss eines Schaltkreises an einen Kabelsatz eines Kraftfahrzeugs dienen. Des Weiteren weist die Trägerplatte 21 eine Mehrzahl von Befestigungsvorrichtungen auf, die der Befestigung des Beleuchtungsmoduls 10 an einem Fahrzeugbauteil, beispielsweise an gut sichtbaren Stellen einer Fahrzeugfront und/oder eines Fahrzeughecks, dienen. Eine am Umfang der Trägerplatte 21 angeordnete Schräge 211 kann zur Realisierung einer Neigung des scheibenförmigen Lichtleiters in Bezug auf die Trägerplatte 21 verwendet werden. Eine beschichtete Textil-Membran 70 ist an der äußeren Seite der Trägerplatte 21 zur Abdichtung gegen den Eintritt von Feuchtigkeit in das Gehäuse 20 vorgesehen.

Eine Mehrzahl von Lichtstrahlen 31 emittierenden Lichtquellen 30 ist in dem Gehäuse 20 aufgenommen. Jede der Lichtquellen 30 ist durch eine Leuchtdiode (LED) gebildet. Außerdem ist in dem Gehäuse 20 ein scheibenförmiger Lichtleiter 40 angeordnet. Die Lichtquellen 30 sind derart angeordnet, dass ein Ring ausgebildet ist, in dem der Lichtleiter 40 teilweise einliegt. Der Lichtleiter 40 weist an seinem Umfang einen Absatz 42 auf und überragt den durch die Lichtquellen 30 gebildeten Ring in radialer Richtung.

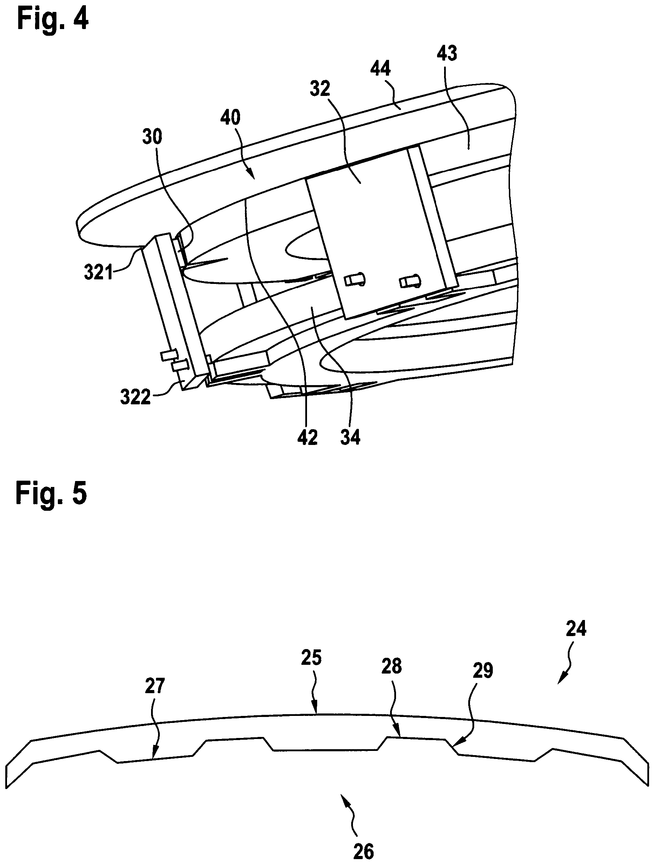

Dadurch, dass der scheibenförmige Lichtleiter 40 an seinem Umfang einen Absatz 42 aufweist, ist der Lichtleiter 40 mit einem ersten Abschnitt 43, der einen ersten Durchmesser aufweist, und einem zweiten Abschnitt 44, der einen zweiten Durchmesser aufweist, der größer als der erste Durchmesser ist, ausgebildet, wie es insbesondere in Fig. 4 erkennbar ist. Der erste Abschnitt 43 mit dem kleineren Durchmesser liegt in dem durch die Lichtquellen 30 gebildeten Ring ein und der zweite Abschnitt 44 mit dem größeren Durchmesser überragt den durch die Lichtquellen 30 gebildeten Ring in radialer Richtung. In dem durch die Lichtquellen 30 gebildeten Ring können zusätzlich weitere Elektronikkomponenten, wie beispielsweise ein Sensor für adaptive Geschwindigkeitsregelung (ACC-Sensor) und/oder eine Kamera 60 angeordnet sein.

Wie in den Figuren 1 bis 4 gezeigt sind zumindest einige der Lichtstrahlen 31 der Lichtquellen 30 in Richtung auf den Mittelpunkt des in diesem Ausführungsbeispiel kreisförmigen Ringes gerichtet und in den Lichtleiter 40 eingeleitet, sodass der Lichtleiter 40 bis in den zweiten Abschnitt 44, der den durch die Lichtquellen 30 gebildeten Ring in radialer Richtung überragt, durch die auf dem Ring gegenüberliegend angeordneten Lichtquellen 30 beleuchtet ist.

Die Mehrzahl von Lichtquellen 30 ist ringförmig um den Lichtleiter 40 herum angeordnet, sodass sich jeweils zwei Lichtquellen 30 gegenüberliegen und sodass die von den Lichtquellen 30 emittierten Lichtstrahlen 31 seitlich in den Lichtleiter eintreten. Die von den Lichtquellen 30 emittierten Lichtstrahlen 31 breiten sich in dem Lichtleiter 40 von einer Einkoppelstelle eines Lichtstrahls 31 von der Lichtquelle 30 an dem Rand des ersten Abschnitts 43 zu dem gegenüberliegenden Rand des zweiten Abschnitts 44 aus und treten an dem Rand des zweiten Abschnitts 44 senkrecht in Richtung des Oberteils 24 aus dem Lichtleiter 40 aus, wie dies in Fig. 1 dargestellt ist.

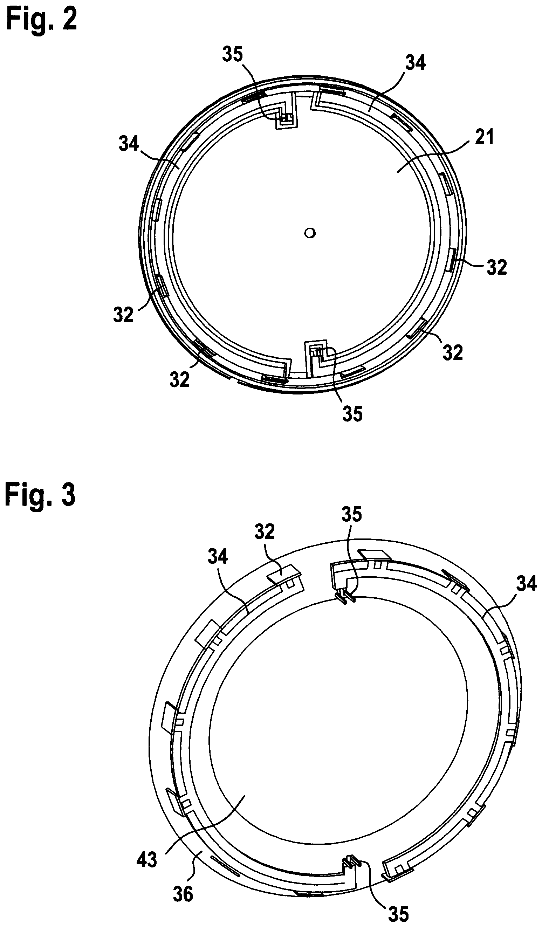

Wie aus Fig. 1 und 3 ersichtlich ist, ist jede der Lichtquellen 30 auf einer einzelnen Leiterplatte 32 angeordnet. Es können jedoch auch mehrere Lichtquellen 30 auf einer einzelnen Leiterplatte 32 angeordnet sein. Die einzelnen Leiterplatten 32 sind jeweils über ein von der Trägerplatte 21 getragenes ringförmiges Stanzgitter 34 elektrisch miteinander verbunden.

Wie in Fig. 2 und 3 gezeigt, ist das Stanzgitter 34 zweigeteilt, um zwei voneinander getrennte Schaltkreise zu bilden. Die zwei getrennten Schaltkreise sind in der Einbauposition des Beleuchtungsmoduls 10 durch das zweigeteilte Stanzgitter eindeutig in einen rechten und einen linken Teil getrennt. Jedes Stanzgitter 34 weist einen Anschluss 35 auf, der einen direkten elektrischen Anschluss an einen Kabelsatz eines Kraftfahrzeugs über den in der Trägerplatte 21 integrierten mehrpoligen Steckverbinder 22 ermöglicht.

Wie in Fig. 3 gezeigt ist eine Abdeckung 36 gegen direkten Lichtaustritt über den Lichtquellen 30 angeordnet, sodass die von den Lichtquellen 30 emittierten Lichtstrahlen 31 nicht zur Umgebung abgestrahlt werden, sondern ausschließlich seitlich in den scheibenförmigen Lichtleiter 40 eintreten.

Wie in Fig. 4 gezeigt weist eine Leiterplatte 32 ein erstes Ende 321 und ein zweites Ende 322, das dem ersten Ende 321 gegenüber liegt, auf. An dem ersten Ende 321 ist eine Lichtquelle 30 angeordnet und dem zweiten Ende ist die Leiterplatte 32 mit dem Stanzgitter 34 elektrisch und mechanisch verbunden, wodurch ein Ring gebildet wird, dessen Durchmesser etwa dem des ersten Abschnitts 43 des Lichtleiter 40 entspricht. innerhalb des Ringes können weitere Elektronikkomponenten wie beispielsweise Sensoren angeordnet sein.

Wie in Figur 1 erkennbar ist eine transparente Diffusorplatte 50 zwischen dem Lichtleiter 40 und dem Oberteil 24 angeordnet. Die Diffusorplatte 50 zerstreut die von den Lichtquellen 30 emittierten Lichtstrahlen 31. Die Diffusorplatte 50 weist dabei nicht gezeigte Strukturflächen auf. Die Strukturflächen sind an den Konturen des Emblems ausgerichtete Mikropyramiden.

Wie in Fig. 5 gezeigt weist das Oberteil 24 eine äußere Oberfläche 25, die transparent poliert ist, und eine dreidimensional-strukturierte innere Oberfläche 26, die einem Emblem eines Kraftfahrzeugherstellers entspricht, auf. Die von den Lichtquellen 30 emittierten Lichtstrahlen 31 dienen der Beleuchtung des Emblems. Die innere Oberfläche 26 weist erste lichtundurchlässige Bereiche 27 mit einer dunklen Hochglanzoptik, zweite eingeschränkt lichtdurchlässige Bereiche 28, und dritte lichtdurchlässige Bereiche 29, die transparent poliert sind, auf. Die äußere Oberfläche 25 bildet eine Frontfläche des Oberteils 24, auf der das hinterleuchtete Emblem sichtbar ist. Durch die dreidimensional strukturierte innere Oberfläche 26 des Oberteils wird eine attraktive optische Darstellung des Emblems ermöglicht. Die dunkle Hochglanzoptik der ersten lichtundurchlässigen Bereiche 27 kann beispielsweise durch Lackieren, Bedampfen, usw. hergestellt werden. Die zweiten eingeschränkt lichtdurchlässigen Bereiche 28 bieten ein homogenes Lichtbild und können durch Vernarben, Satinieren, Bedampfen, Lackieren, usw. hergestellt werden, sodass von außen betrachtet, eine wertige Anmutung realisiert wird. Die dritten lichtdurchlässigen Bereiche 29 gewährleisten einen ungehinderten Lichtaustritt.

Das Beleuchtungsmodul 10 ist als eine Hochvolt-Komponente für den Einsatz in Hybrid-/Elektro-Kraftfahrzeugen und anderen Kraftfahrzeugen mit Hochvolt-Systemen ausgebildet.

### Bezugszeichenliste

- 10: Kraftfahrzeugbeleuchtungsmodul
- 20: Gehäuse
- 21: Trägerplatte
- 211: Schräge
- 22: Steckverbinder
- 23: Befestigungsvorrichtung
- 24: Oberteil
- 25: äußere Oberfläche
- 26: innere Oberfläche
- 27: erste lichtundurchlässige Bereiche
- 28: zweite eingeschränkt lichtdurchlässige Bereiche
- 29: dritte lichtdurchlässige Bereiche
- 30: Lichtquelle
- 31: Lichtstrahl
- 32: Leiterplatte
- 321: erstes Ende
- 322: zweites Ende
- 34: Stanzgitter
- 35: Anschluss
- 36: Abdeckung
- 40: Lichtleiter
- 42: Absatz
- 43: erster Abschnitt
- 44: zweiter Abschnitt
- 50: Diffusorplatte
- 60: Sensor für adaptive Geschwindigkeitsregelung
- 70: Textil-Membran

## Patentansprüche

1. Kraftfahrzeugbeleuchtungsmodul (10), zumindest umfassend ein Gehäuse (20), das von einer Trägerplatte (21) und einem daran befestigten kreisrunden oder elliptischen Oberteil (24) gebildet wird, wobei das Oberteil (24) zumindest teilweise lichtdurchlässig ist und das Gehäuse (20) nach außen abschließt, wobei eine Mehrzahl von Lichtstrahlen emittierenden Lichtquellen (30) in dem Gehäuse (20) aufgenommen sind, wobei in dem Gehäuse (20) ein scheibenförmiger Lichtleiter (40) angeordnet ist und die Lichtquellen (30) derart angeordnet sind, dass ein kreisrunder oder elliptischer Ring ausgebildet ist, wobei der Lichtleiter (40) in dem Ring zumindest teilweise einliegt, wobei der Lichtleiter (40) an seinem Umfang zumindest einen Absatz (42) aufweist und den durch die Lichtquellen (30) gebildeten Ring in radialer Richtung überragt, wobei der Lichtleiter mit einem ersten Abschnitt, der einen ersten Durchmesser aufweist, und einem zweiten Abschnitt, der einen zweiten Durchmesser aufweist, der größer als der erste Durchmesser ist, ausgebildet ist und wobei der erste Abschnitt mit dem kleineren Durchmesser in dem durch die Lichtquellen gebildeten Ring einliegt und der zweite Abschnitt mit dem größeren Durchmesser den durch die Lichtquellen gebildeten Ring in radialer Richtung überragt, **dadurch gekennzeichnet, dass** der Ring zweigeteilt ist, wobei zwei getrennte Abschnitte des Rings in der Einbauposition des Beleuchtungsmoduls durch eine senkrechte Trennlinie in einen rechten und einen linken Teil getrennt sind.

2. Beleuchtungsmodul nach Anspruch 1, **dadurch gekennzeichnet, dass** zumindest ein Teil der Lichtstrahlen (31) der Lichtquellen (30) in Richtung auf den Mittelpunkt oder die Brennpunkte des Ringes gerichtet sind und in den Lichtleiter (40) eingeleitet sind, sodass der Lichtleiter (40) bis in jenen Teil, der den durch die Lichtquellen (30) gebildeten Ring in radialer Richtung überragt, durch die auf dem Ring gegenüberliegend angeordneten Lichtquellen (30) beleuchtet ist.

3. Beleuchtungsmodul nach einem der vorherigen Ansprüche, **dadurch gekennzeichnet, dass** jede der Lichtquellen (30) auf einer einzelnen Leiterplatte (32) angeordnet ist oder mehrere Lichtquellen (30) auf einzelnen Leiterplatte (32) angeordnet sind und die einzelnen Leiterplatten (32) über ein von der Trägerplatte (21) getragenes ringförmiges Stanzgitter (34) elektrisch miteinander verbunden sind.

4. Beleuchtungsmodul nach Anspruch 3, **dadurch gekennzeichnet, dass** das Stanzgitter (34) zweigeteilt ist, um zwei voneinander getrennte Schaltkreise zu bilden, insbesondere dass die zwei getrennten Schaltkreise in der Einbauposition des Beleuchtungsmoduls (10) durch eine senkrechte Trennlinie in einen rechten und einen linken Teil getrennt sind.

5. Beleuchtungsmodul nach einem der vorherigen Ansprüche, **dadurch gekennzeichnet, dass** eine oder mehrere Abdeckung/en (36) gegen direkten Lichtaustritt über den Lichtquellen (30) angeordnet ist/sind, sodass das von den Lichtquellen (30) emittierte Lichtstrahlen (31) nicht zur Umgebung abgestrahlt werden, sondern seitlich in den scheibenförmigen Lichtleiter (40) eintreten.

6. Beleuchtungsmodul nach einem der vorherigen Ansprüche, **dadurch gekennzeichnet, dass** das Oberteil (24) eine äußere Oberfläche (25), die insbesondere transparent poliert ist, und eine dreidimensional strukturierte innere Oberfläche (26), die einem Emblem entspricht, aufweist, wobei die innere Oberfläche (26) insbesondere erste lichtundurchlässige Bereiche (27), insbesondere mit einer dunklen Hochglanzoptik, zweite eingeschränkt lichtdurchlässige Bereiche (28) und dritte lichtdurchlässige insbesondere transparent polierte Bereiche (29) aufweist.

7. Beleuchtungsmodul nach Anspruch 6, **dadurch gekennzeichnet, dass** eine transparente Diffusorplatte (50) zwischen dem Lichtleiter (40) und dem Oberteil (24) angeordnet ist, die die von den Lichtquellen (30) emittierten Lichtstrahlen (31) zerstreut, wobei die Diffusorplatte (50) Strukturflächen, insbesondere an den Konturen des Emblems ausgerichtete Mikropyramiden, aufweist.

8. Beleuchtungsmodul nach einem der vorherigen Ansprüche, **dadurch gekennzeichnet, dass** jede der Lichtquellen (30) durch eine Leuchtdiode gebildet ist.

9. Beleuchtungsmodul nach einem der vorherigen Ansprüche, **dadurch gekennzeichnet, dass** innerhalb des durch die Lichtquellen (30) gebildeten Rings und/oder in einem Einbauraum ausgehend vom Oberteil hinter der durch den Ring aufgespannten Ebene ein Sensor insbesondere für eine adaptive Geschwindigkeitsregelung (60) und/oder eine Kamera angeordnet ist/sind.

10. Beleuchtungsmodul nach einem der vorherigen Ansprüche, **dadurch gekennzeichnet, dass** das Beleuchtungsmodul (10) als eine Hochvolt-Komponente ausgebildet ist.

## Claims

1. Motor vehicle lighting module (10), comprising at least a housing (20) which is formed from a support plate (21) and a circular or elliptical upper part (24) fastened thereto, wherein the upper part (24) is at least partially light-transmitting and closes off the housing (20) to the outside, wherein a plurality of light sources (30) emitting light beams are accommodated in the housing (20), wherein a disc-shaped light guide (40) is arranged in the housing (20) and the light sources (30) are arranged in such a manner that a circular or elliptical ring is formed,
wherein the light guide (40) at least partially lies in the ring, wherein the light guide (40) has at least one shoulder (42) on the circumference thereof and projects beyond the ring formed by the light sources (30) in a radial direction, wherein the light guide is formed with a first section which has a first diameter, and a second section which has a second diameter that is larger than the first diameter, and wherein the first section with the smaller diameter lies in the ring formed by the light sources and the second section with the larger diameter projects in the radial direction beyond the ring formed by the light sources, **characterized in that** the ring is divided into two parts,
wherein two separate portions of the ring in the installation position of the lighting module are separated into a right-hand and a left-hand part by a perpendicular separating line.

2. Lighting module according to claim 1, **characterized in that** at least some of the light beams (31) of the light sources (30) are directed in the direction of the center or the focal points of the ring and are introduced into the light guide (40), so that the light guide (40) is illuminated by the light sources (30) arranged lying opposite on the ring right into that part which projects in the radial direction beyond the ring formed by the light sources (30).

3. Lighting module according to any one of the preceding claims, **characterized in that** each of the light sources (30) is arranged on an individual printed circuit board (32) or multiple light sources (30) are arranged on individual printed circuit boards (32) and the individual printed circuit boards (32) are electrically connected together by way of an annular lead frame (34) borne by the support plate (21).

4. Lighting module according to claim 3, **characterized in that** the lead frame (34) is divided into two parts in order to form two circuits which are separate from each other, in particular **in that** the two separate circuits in the installation position of the lighting module (10) are separated into a right-hand and a left-hand part by a perpendicular separating line.

5. Lighting module according to any one of the preceding claims, **characterized in that** one or more cover(s) (36) protecting against direct emergence of light is/are arranged over the light sources (30), so that the light beams (31) emitted by the light sources (30) are not emitted out to the surroundings, but enter laterally into the disc-shaped light guide (40).

6. Lighting module according to any one of the preceding claims, **characterized in that** the upper part (24) has an outer surface (25) which is in particular transparently polished, and a three-dimensionally textured inner surface (26) which corresponds to an emblem, wherein the inner surface (26) has in particular first, non-light-transmitting, regions (27), in particular with a dark high-gloss appearance, second limitedly light-transmitting regions (28), and third light-transmitting, in particular transparently polished, regions (29).

7. Lighting module according to claim 6, **characterized in that** a transparent diffusor plate (50) is arranged between the light guide (40) and the upper part (24), which diffusor plate scatters the light beams (31) emitted by the light sources (30), wherein the diffusor plate (50) has textured surfaces, in particular micro-pyramids aligned with the contours of the emblem.

8. Lighting module according to any one of the preceding claims, **characterized in that** each of the light sources (30) is formed by a light-emitting diode.

9. Lighting module according to any one of the preceding claims, **characterized in that** a sensor, in particular for an adaptive cruise control (60), and/or a camera is/are arranged within the ring formed by the light sources (30) and/or in an installation space starting from the upper part behind the plane spanned by the ring.

10. Lighting module according to any one of the preceding claims, **characterized in that** the lighting module (10) is formed as a high-voltage component.

## Revendications

1. Module d'éclairage de véhicule à moteur (10), comprenant au moins un boîtier (20) qui est formé par une plaque de support (21) et une partie supérieure (24) circulaire ou elliptique fixée à celle-ci, dans lequel la partie supérieure (24) est au moins partiellement transparente et ferme le boîtier (20) vers l'extérieur, dans lequel une pluralité de sources de lumière (30) émettant des rayons lumineux sont logées dans le boîtier (20), dans lequel un guide de lumière (40) en forme de disque est disposé dans le boîtier (20) et les sources de lumière (30) sont disposées de sorte qu'un anneau circulaire ou elliptique soit formé,
dans lequel le guide de lumière (40) est au moins partiellement inséré dans l'anneau, dans lequel le guide de lumière (40) présente au niveau de sa périphérie au moins un épaulement (42) et dépasse de l'anneau formé par les sources de lumière (30) en direction radiale, dans lequel le guide de lumière est conçu avec une première section qui présente un premier diamètre et une deuxième section qui présente un deuxième diamètre, qui est plus grand que le premier diamètre, et dans lequel la première section avec le plus petit diamètre est insérée dans l'anneau formé par les sources de lumière et la deuxième section avec le plus grand diamètre dépasse de l'anneau formé par les sources de lumière en direction radiale, **caractérisé en ce que** l'anneau est divisé en deux,
dans lequel deux sections séparées de l'anneau sont séparées en une partie droite et une partie gauche par une ligne de séparation verticale dans la position de montage du module d'éclairage.

2. Module d'éclairage selon la revendication 1, **caractérisé en ce qu'**au moins une partie des rayons lumineux (31) des sources de lumière (30) sont dirigés vers le point central ou les foyers de l'anneau et sont introduits dans le guide de lumière (40), de sorte que le guide de lumière (40) soit éclairé par les sources de lumière (30) disposées en face de l'anneau jusque dans la partie qui dépasse l'anneau formé par les sources de lumière (30) en direction radiale.

3. Module d'éclairage selon l'une quelconque des revendications précédentes, **caractérisé en ce que** chacune des sources de lumière (30) est disposée sur une carte de circuit imprimé individuelle (32) ou plusieurs sources de lumière (30) sont disposées sur des cartes de circuit imprimé individuelles (32) et les cartes de circuit imprimé individuelles (32) sont connectées électriquement entre eux par une grille estampée annulaire (34) portée par la plaque de support (21).

4. Module d'éclairage selon la revendication 3, **caractérisé en ce que** la grille estampée (34) est divisée en deux pour former deux circuits séparés l'un de l'autre, en particulier **en ce que** les deux circuits séparés sont séparés en une partie droite et une partie gauche par une ligne de séparation verticale dans la position de montage du module d'éclairage (10).

5. Module d'éclairage selon l'une quelconque des revendications précédentes, **caractérisé en ce qu'**un ou plusieurs caches (36) de protection contre une émission directe de lumière sont disposés au-dessus des sources de lumière (30), de sorte que les rayons lumineux (31) émis par les sources de lumière (30) ne soient pas renvoyés dans l'environnement, mais pénètrent latéralement dans le guide de lumière en forme de disque (40).

6. Module d'éclairage selon l'une quelconque des revendications précédentes, **caractérisé en ce que** la partie supérieure (24) présente une surface extérieure (25), qui est en particulier polie de manière transparente, et une surface intérieure (26) structurée de manière tridimensionnelle, qui correspond à un emblème, dans lequel la surface intérieure (26) présente en particulier de premières zones opaques (27), en particulier avec une finition brillante foncée, de deuxièmes zones (28) à transparence limitée et de troisièmes zones (29) transparentes, en particulier polies de manière transparente.

7. Module d'éclairage selon la revendication 6, **caractérisé en ce qu'**une plaque de diffuseur transparente (50) est disposée entre le guide de lumière (40) et la partie supérieure (24), plaque qui diffuse les rayons lumineux (31) émis par les sources de lumière (30), dans lequel la plaque de diffuseur (50) présente des surfaces structurées, en particulier des micropyramides alignées sur les contours de l'emblème.

8. Module d'éclairage selon l'une quelconque des revendications précédentes, **caractérisé en ce que** chacune des sources de lumière (30) est formée par une diode électroluminescente.

9. Module d'éclairage selon l'une quelconque des revendications précédentes, **caractérisé en ce qu'**un capteur, en particulier pour un régulateur de vitesse adaptatif (60), et/ou une caméra sont disposés à l'intérieur de l'anneau formé par les sources de lumière (30) et/ou dans un espace de montage partant de la partie supérieure derrière le plan tendu par l'anneau.

10. Module d'éclairage selon l'une quelconque des revendications précédentes, **caractérisé en ce que** le module d'éclairage (10) est conçu sous forme de composant haute tension.
